# EUROPEAN PATENT APPLICATION

(11) **EP 4 664 602 A1**
(43) Date of publication of application: **17.12.2025**
(21) Application number: 24181611.5
(22) Date of filing: 12.06.2024
(51) Int. Cl.: H01M 10/48, H01M 50/209, H01M 50/287, H01M 50/505, H01M 10/42

(54) **BATTERY MODULE, METHOD FOR PROVIDING MONITORING FUNCTIONALITY FOR THE SAME, BATTERY SYSTEM AND ELECTRIC VEHICLE**

(71) Applicant: Samsung SDI Co., Ltd., Yongin-si, Gyeonggi-do 17084 (KR)
(72) Inventor: Haring, Fritz, 8600 Bruck / Mur (AT); Knollseisen, Gerald, 8045 Graz (AT); Blaznik, Matic, 2000 Maribor (SI)
(74) Representative: Gulde & Partner

(57) **Abstract**

The present disclosure refers to a battery module (100) with a simple connection structure enabling assembly with fewer steps, including a plurality of battery cells (10), a busbar (1) for contacting the plurality of battery cells (10), a thermally and electrically conducting bushing (2) thermally and electrically fixed to the busbar (1), and a circuit board (3) fixed to the bushing (2) by fixation means such that the bushing (2) spaces the circuit board (3) from the busbar (1), wherein the circuit board (3) includes a temperature sensor (5) configured for contacting the busbar (1) through the bushing (2) in a thermally conducting manner, and a voltage signal line (6) configured for contacting the busbar (1) through the bushing (2) in an electrically conducting manner.

## Description

### Field of the Disclosure

The present disclosure relates to a battery module with a bushing connecting a circuit board with a busbar, wherein the circuit board includes a temperature sensor and a voltage signal line for monitoring the battery module.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above parameters, such as minimum and maximum cell voltage, state of charge (SOC) or depth of discharge (DOD) to indicate the charge level of the battery cell, state of health (SOH; a variously-defined measurement of the remaining capacity of the battery cell as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board is installed at each cell, with just a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by over-current, over-voltage (during charging), over-temperature, under-temperature, over-pressure, and ground fault or leakage current detection. The BMS may prevent the battery from operating outside its safe operating parameter by including an internal switch (e.g., a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually include a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

Thus, the BMS is provided for managing the battery pack, such as by protecting the battery from operating outside its safe operating area, monitoring its state, calculating secondary data, reporting that data, controlling its environment, authenticating it and/or balancing it.

In case of an abnormal operation state, a battery pack shall usually be disconnected from a load connected to a terminal of the battery pack. Therefore, battery systems further include a battery disconnect unit, BDU, that is electrically connected between the battery module and battery system terminals. Thus, the BDU is the primary interface between the battery pack and the electrical system of the vehicle. The BDU includes electromechanical switches that open or close high current paths between the battery pack and the electrical system. The BDU provides feedback to the battery control unit, BCU, accompanied to the battery modules such as voltage and current measurements. The BCU controls the switches in the BDU using low current paths based on the feedback received from the BDU. The main functions of the BDU may thus include controlling current flow between the battery pack and the electrical system and current sensing. The BDU may further manage additional functions like external charging and pre-charging.

The BMS is critical to the safe operation and optimal performance of rechargeable battery cells and helps minimize the possibility of thermal runaway. For example, if the BMS detects that the temperature is too hot, it can regulate the temperature by controlling cooling fans. Alternatively, if the battery cell cannot be cooled and safe conditions restored, the BMS may shut down necessary battery cells to protect the entire system.

For acquiring information of the battery cells in a battery module, the battery cells may be contacted by monitoring means. One common method is to contact busbars, which connect multiple terminals of battery cells and which may carry current of multiple battery cells. Key information is, for example, the temperature of the busbar and the voltage of the busbar. Inside state of the art BDUs, temperature and high-voltage voltage sensing is used. The connections are realized with high-voltage cables for voltage sensing and flex prints for temperature sensors. Therefore, a more complex assembly is required since the high-voltage cables and the flex prints have to be mounted. Alternatively, conductive tabs would have to be welded to the busbars. Further, electronics is usually screwed to the housing.

The goal of the present disclosure is, therefore, to provide an improved connection structure for acquiring key information related to the battery cells.

### Summary of Invention

The invention is defined by the appended claims. The description that follows is subjected to this limitation. Any disclosure lying outside the scope of the claims is only intended for illustrative as well as comparative purposes.

According to one aspect of the present disclosure, a battery module, includes a plurality of battery cells, a busbar for contacting the plurality of battery cells, a thermally and electrically conducting bushing thermally and electrically fixed to the busbar, and a circuit board fixed to the bushing by fixation means such that the bushing spaces the circuit board from the busbar. The circuit board includes a temperature sensor configured for contacting the busbar through the bushing in a thermally conducting manner and a voltage signal line configured for contacting the busbar through the bushing in an electrically conducting manner.

According to a second aspect of the present disclosure, a method for providing a monitoring functionality for a battery module according the first aspect is disclosed, wherein the method includes the steps of a) fixing the bushing to the busbar, b) placing the circuit board including the temperature sensor and the voltage signal line onto the bushing such that a board opening of the circuit board and the bushing align, and c) fastening the bushing to the circuit board by fixation means, thereby electrically and thermally connecting the busbar to the circuit board through the bushing.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic overview of a battery module according to an embodiment.
- Fig. 2: illustrates a schematic cross section of a bushing according to one embodiment.
- Fig. 3A: illustrates a schematic cross section of a bushing according to first alternative embodiment.
- Fig. 3B: illustrates a schematic cross section of a bushing according to a second alternative embodiment.
- Fig. 3C: illustrates a schematic cross section of a bushing according to a third alternative embodiment.
- Fig. 4: illustrates a perspective exemplary view of a bushing between a busbar and a circuit.
- Fig. 5: illustrates a temperature change over time on a circuit board at a heat spot and at a remote temperature sensor.
- Fig. 6: illustrates a method flow chart according to an embodiment of the present invention.
- Fig. 7: illustrates a schematic view of a battery system according to an embodiment of the present invention.
- Fig. 8: illustrates a schematic view of an electric vehicle according to an embodiment of the present invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will also be understood that when a film, a region, or an element is referred to as being "above" or "on" another film, region, or element, it can be directly on the other film, region, or element, or intervening films, regions, or elements may also be present.

The various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery module includes a plurality of battery cells, a busbar for contacting the plurality of battery cells, a thermally and electrically conducting bushing which is thermally and electrically fixed to the busbar, and a circuit board fixed to the bushing by fixation means such that the bushing spaces the circuit board from the busbar. The circuit board includes a temperature sensor configured for contacting the busbar through the bushing in a thermally conducting manner and a voltage signal line configured for contacting the busbar through the bushing in an electrically conducting manner.

By applying the bushings to the busbars, an electrical connection from the busbars to the electronic are realized. All additional parts like HV cables for voltage sensing or flex prints for temperature sensing are no longer required and are replaced by the bushings. Through the connection of the bushing to the busbar, an electrical and thermal connection is established.

The bushing may be made of a thermally and electrically highly conducting material. A thermally and electrically highly conducting material is characterized by low losses. That is, a thermally conducting material is characterized by that the temperature difference between two opposite ends along its longitudinal direction is low compared to other materials. Further, an electrically conducting material is characterized by that the electric potential difference between two opposite ends along its longitudinal direction is low compared to other materials. The busbar may be an electrically conducting longitudinally extending part for connecting terminals of a plurality of battery cells. The busbar may be made of metal. By a direct connection of the bushing with the busbar, no additional parts for contacting the busbar are required any more.

The cross-sectional shape of the bushing may be round, square, elliptic, rectangular, hexagon or any other suitable shape.

The busbar may also be, in sections, bend in a vertical direction. The circuit board may be a printed circuit board (PCB), a multiplayer PCB or a flexible PCB. A comparatively thin PCB has the advantage that temperature changes quickly, depending on the surrounding. In other words, responsivity is improved. The circuit board may have a metallization around the connection point with the bushing. Metal is a good heat conductor and, therefore, the metallization might be thicker than for common circuit boards. Optionally, the metallization may only be thicker in the vicinity of the bushing and the temperature sensor than in other regions of the circuit board. The temperature sensor may be an SMD sensor and may be arranged within a radius spaced part from the center of the bushing of 0.5 to 4mm. Optionally, the radius may be 0.6 to 1.5mm. The closer the temperature sensor is located to the bushing, the lower is the error in temperature measurement of the bushing and, consequently, the temperature measurement of the busbar. Temperature measurement may be limited to temperatures of 140°C. Optionally, temperature measurement is limited to 130°C. The voltage signal line may be made of an electrically conducting material with high conductivity in order to minimize losses along the voltage line. Thereby, exact measurement of the voltage of the busbar is possible. The bushing may be a solid body for spacing and connecting the busbar to the circuit board. The bushing may partly be hollow. The hollow portion of the bushing may be used by the fixation means for fixing the circuit board to the bushing. However, the bushing may also have a protruding portion going through the circuit board. Then, the fixation means may interact with the protruding portion and, thereby, fix the circuit board to the bushing.

Such a battery module has the advantage that by fixing of the circuit board to its designated mounting location, electrical and thermal connection is concurrently established.

According to another embodiment, the bushing is fixed to the busbar in a form-fitting manner and/or in a force-fitting manner and/or in a materially bonded manner.

The bushing may be fixed to the busbar in various ways. For example, the bushing may be fixed in a form-fitting manner. Here, a form-fit may be realized by hooks on one part and corresponding holes on the other part, which snap and connect when vertically moved together. Alternatively, locking may be achieved by a rotational movement of the bushing relative to the busbar.

Optionally, the bushing may be fixed in a force-fitting manner. This may be realized by press-fitting the bushing in an opening of the busbar. Alternatively, the busbar may have multiple smaller through holes, in which protruding pins of the bushing can be press-fitted. Further alternatively, the busbar may include a protrusion on which the bushing can be press-fitted. The force-fit has the advantage that heat can be conducted through a larger contact surface between both parts. Further, assembly is quick because no processing steps are required.

Optionally, the bushing may be fixed in a materially bonded manner. This may be realized, for example, by gluing, welding or soldering. Since the contact surface is increased, heat transfer is improved.

All of the above fixing manners may be combined in any suitable variation.

According to another embodiment, the circuit board has a thickness and the bushing spaces the circuit board from the busbar by at least twice the thickness of the circuit board.

The spacing of the circuit board from the busbar prevents the circuit board from being heated by the busbar. The circuit board also includes other parts which are sensitive to heat. Therefore, it is favorable not to transfer too much heat to the circuit board. In other words, heat may only be transferred to the circuit board in the vicinity of the bushing and the temperature sensor. This may be realized by that the circuit board is configured to thermally isolate the region of the board opening from other circuit elements on the circuit board not directly related to the temperature and voltage measurement.

According to another embodiment, the bushing spaces the circuit board from the busbar by at least 8mm. In another embodiment, the spacing is at least 10mm. Optionally, the spacing is at least 12mm.

In another embodiment, the bushing is provided with a bushing opening extending from a first end face of the bushing facing the circuit board towards the busbar.

In other words, the bushing opening may be blind and not go through the whole bushing. The bushing opening may be provided with an inner thread for holding a fixation means like, for example, a screw. The cross-sectional shape of the bushing opening may be round or square or have any other suitable shape. In one embodiment, the shape of the bushing opening is adopted to the shape of the bushing.

According to another embodiment, the bushing opening extends from the first end face to a second end face of the bushing opposite to the first end face.

In other words, the bushing opening may be a through-hole.

In another embodiment, the bushing is a hollow cylinder provided with a bushing opening.

The wall thickness of the bushing, in a cross-sectional view, where the bushing opening is present, may be between 0.5 to 3mm. Optionally, the wall thickness may be between 1 and 2mm. In one embodiment, the wall thickness is between 1.3 and 1.5mm. The wall thickness may be constant for the whole bushing. This facilitates ease of processing of the bushing. Alternatively, the wall thickness may not be constant, for example, to adopt the bushing for a form fit or for the fixation means. A larger wall thickness has better thermal conductivity.

According to another embodiment, the fixation means include a screw, a bolt, a plug, a bolt, a nut, a splint or a rivet.

Optionally, a portion of the fixation means is configured for being fixedly connected in the bushing opening.

In another embodiment, the circuit board forms part of a monitoring unit selected from the group of a battery disconnect unit, a battery management unit or a cell supervision circuit.

Due to the integration into one of the above units, reliable operation due to short signal distances and the elimination of interconnects is achieved.

According to another embodiment, a temperature difference between a section of the circuit board in direct contact to the bushing and a section of the circuit board in direct contact to the temperature sensor is less than 1K. In another embodiment, the temperature difference is less than 0.5K.

The bushing transfers the heat from the busbar towards the circuit board. In other words, the bushing is the heat source which is attached to the circuit board and from which the heat spreads in the circuit board. The temperature difference is directed to the difference of temperature in the circuit board between the heat source and the temperature sensor, which represents a measurement error of the temperature sensor. Accordingly, a small temperature difference is favorable.

In another embodiment, the bushing is a metal bushing. Metals provide high thermal and electric conductivity as well as strength and elasticity, to, for example, withstand temporary stress during assembly. The metal may be selected from the group of stainless steel, aluminum, brass, copper, gold, silver or any combinations or alloys thereof.

Alternatively, the bushing may be made of carbon fiber. Carbon fibers are available with comparable features as metals regarding thermal and electrical conductivity. Optionally, carbon fibers may be coated with one of the metals mentioned above. Thereby, the strength of carbon fibers may be combined with the high electric and thermal conductivity of metals.

According to another embodiment, the voltage signal line is a high voltage sensing line.

A high voltage sensing line does not carry significant current, that is, a very low current, sufficient to carry out voltage measurement. In other words, the measurement may be a high-resistance voltage measurement. However, voltage sensing is not bound to the vicinity of the bushing and may be carried out remotely, where other electronic components of the monitoring unit are located.

According to a second aspect of the present disclosure, a method for providing a monitoring functionality for a battery module according the first aspect is disclosed. The method includes the following steps. Firstly, the bushing is fixed to the busbar. Secondly, the circuit board including the temperature sensor and the voltage signal line is placed onto the bushing such that a board opening of the circuit board and the bushing align. In a third step, the bushing is fastened to the circuit board by fixation means. Thereby, the busbar is electrically and thermally connected to the circuit board through the bushing.

Optionally, the method consists only of the above three steps. Thereby, the electrical, thermal and mechanical connection of the circuit board is realized by only one fastening action. Accordingly, efficient assembly can be realized and cost reductions are achieved. Further optionally, the board opening of the circuit board and the bushing opening of the bushing align, such that the fixation means can be inserted into both openings. The alignment reference point of the bushing may refer to the center of the bushing in a top view of the bushing. Then, the fixation means may be inserted into the aligned openings. Further optionally, the process steps may be automated.

A third aspect of the present disclosure refers to a battery system including a plurality of battery modules according to the first aspect.

The battery system may include at least two battery modules. In another embodiment, at least three battery modules are included. In yet another embodiment, at least four battery modules are included.

Yet another aspect of the present disclosure refers to an electric vehicle including the battery module according to the first aspect or the battery system according to the third aspect.

The electric vehicle may include exactly one battery module or battery system. This module or system may be arranged centrally, at a lower position in the vehicle. Alternatively, the electric vehicle may include two or more battery modules or battery systems. These modules or systems may be arranged at different locations within the vehicle, allowing for a flexible weight and space adjustment.

### Specific Embodiments

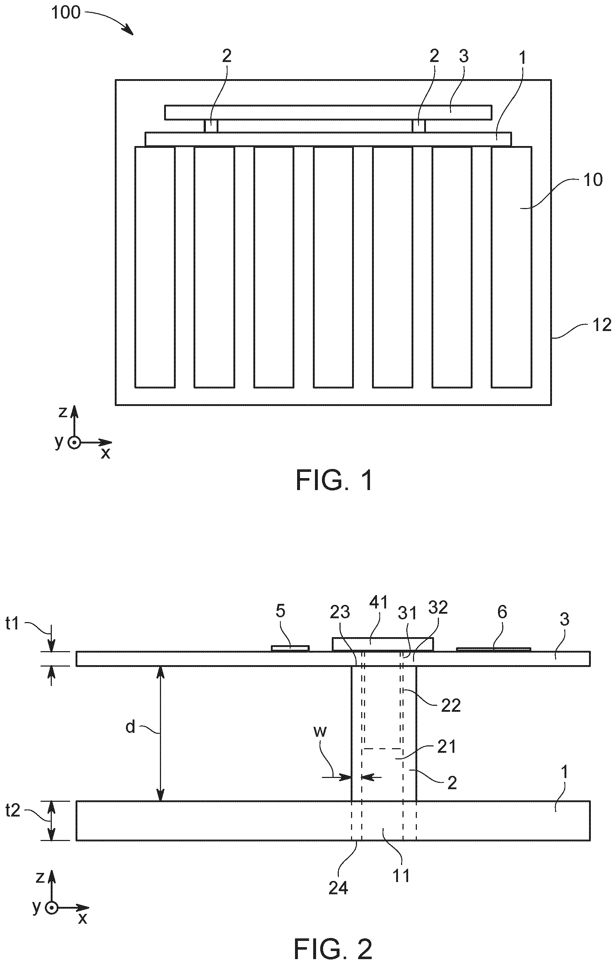

Fig. 1 illustrates a schematic overview of a battery module 100 according to an embodiment of the present disclosure. The battery module 100 includes a housing 12, a plurality of battery cells 10, a busbar 1 and a circuit board 3. The busbar 1 is connected to the circuit board 3 by a bushing 2, as will be explained in detail in Fig. 2. At least one bushing 2 is present between the circuit board 3 and the busbar 1. The position of the bushing 2 is not restricted by the position of the battery cells 10. Further, a monitoring unit may be included. The monitoring unit may be a battery disconnect unit, a battery management unit or a cell supervision circuit which process the received data from the battery cells 10. The battery monitoring unit may include the circuit board 3. In this embodiment, seven battery cells 10 are shown. However, the number of battery cells 10 is not limited thereto, and may be any number suitable for an application. Further, even though the battery cells 10 are arranged next to each other in a longitudinal direction (x-direction) of the battery module 100, the arrangement manner is merely exemplary and not limited thereto. For example, the battery cells 10 may be arranged in two or more rows stacked. Stacked refers to an y-direction, perpendicular to the longitudinal x-direction and a vertical z-direction. The busbars 1 may be adapted to fit the arrangement of the battery cells 10, such that terminals of multiple or all battery cells 10 are connected.

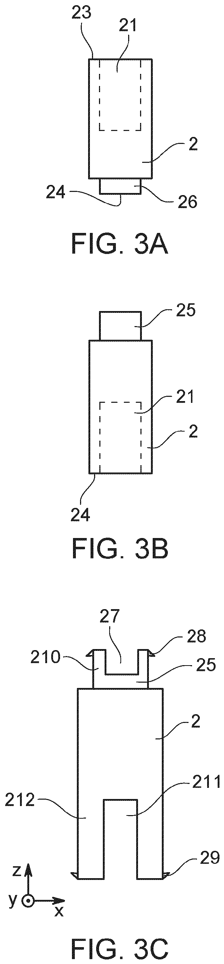

Fig. 2 illustrates a schematic cross section of a bushing 2 according to one embodiment. The descriptions regarding Fig. 1 apply accordingly. In this non-limiting embodiment, the busbar 1 is provided with an opening 11, into which the bushing 2 is inserted. The bushing 2 may have a bushing opening 21, which may extend through the bushing 2, that is, forming a through-hole. Then, the bushing 2 may be a hollow cylinder. However, the bushing opening 21 may also not go through the whole bushing 2 and only partially extend from a first end face 23 of the bushing 2 facing the circuit board 3 towards the busbar 1. Optionally, the bushing opening 21 may be divided in two sections, separated by a solid section (in a cross-sectional view of the bushing 2) of the bushing 2. When a bushing opening 21 is present, the remaining wall thickness w of the bushing 2 may be between 0.5 to 3mm. Optionally, the wall thickness may be between 1 and 2mm. In this non-limiting embodiment, the wall thickness may be between 1.3 and 1.5mm. The bushing opening 21 in the vicinity of the opening 11 of the busbar 1 is suitable for a force-fitting connection between the busbar 1 and the bushing 2. That is, the bushing may be press-fitted into the opening 11. A press-fit provides a contact surface along the whole opening 11 between the busbar 1 and the bushing 2. The bushing 2 may a metal bushing. This allows for a low thermal and electrical resistance between the parts. Optionally, the busbar 1 and the bushing 2 may additionally be fixed in a materially bonded manner. This may, for example, be welding, soldering or gluing. Thereby, the contact surface between both parts increases and, therefore, the thermal and electrical conductivity increases further. Additionally, mechanical strength is also increased. Other connection manners will be discussed below regarding Figs. 3a to 3b which would also be feasible for this embodiment. The bushing 2 has a first end face 23 and a second end face 24, which may be parallel to each other. The distance between both end faces may be equivalent to the length of the bushing 2.

At the first end face 23, the bushing 2 supports the circuit board 3. The circuit board 3 is provided with a board opening 31 for the fixation of the circuit board 3 to the bushing 2. In this non-limiting embodiment, the board opening 31 of the circuit board 3 is at least as large as the bushing opening 21. However, the board opening 31 is not larger than an overall thickness (x-y-plane) of the bushing 2. In other words, the first end face 23 forms a support and/or contact face for the circuit board 3. Through this support and/or contact face, electric and thermal contact is established between both parts. Further, a fixation means is provided to fix the circuit board 3 to the bushing 2. The fixation means may be a separate part or may be integrally formed with the circuit board 3 or the bushing 2. In this non-limiting embodiment, the fixation means may be implemented as a screw 41. Thereby, a screwing connection is used to mount the electronics, that is, the circuit board 3, directly to the busbar 1. The bushing opening 21 may be provided with a corresponding internal thread 22. However, the screw 41 may also be a self-cutting screw, so that no inner thread 22 has to be provided. Alternatively, the fixation means may also be a bolt or a rivet. The fixation means fixes the circuit board 3 to the bushing 2 such that the circuit board 3 is securely fixed. Additionally, the fixation ensures thermal and electrical conductivity between the bushing 2 and the circuit board 3. With this screwing connection, all temperature and high-voltage voltage sensing connections are already realized. All additional mounting steps are eliminated. The circuit board 3 includes a temperature sensor 5 configured for contacting the busbar 1 through the bushing 2 in a thermally conducting manner. In other words, the temperature sensor 5 is provided for measuring the temperature of the busbar 1, without directly contacting the busbar 1. For the temperature measurement to be accurate, the temperature sensor 5 is positioned in the vicinity of the board opening 31. The temperature sensor 5 may be positioned on the upper side or the lower side of the circuit board 3. The vicinity of the board opening 31 may refer to a position of the temperature sensor 5 within a circle with a radius of 0.5 to 4mm. Optionally, the radius may be 0.6 to 1.5mm. This ensures a small temperature difference between the contact face of the circuit board 3 with the bushing 2 and another contact face of the circuit board 3 with the temperature sensor 5. The temperature difference between both contact faces may be less than 1K. In another embodiment, the temperature difference may be less than 0.5K.

The circuit board 3 includes a voltage signal line 6 configured for contacting the busbar 1 through the bushing 2 in an electrically conducting manner. Therefore, the voltage signal line 6 may contact the upper side and/or the lower side of the circuit board 3 at the board opening 31. Further, the voltage signal line 6 may extend on the upper side, lower side and/or an interlayer of the circuit board 3. The voltage sensing line 6 may be in direct contact to the bushing 2 or in intermediate contact over the fixation means. Additionally, the voltage signal line 6 may be a high voltage sensing line.

The bushing 2 spaces the circuit board 3 from the busbar 1 by a distance d. The distance d may be equal to or more than 8mm, equal to or more than 10mm or equal to or more than 12mm. Optionally, the distance d may be at least twice a thickness t1 of the circuit board 3. Further optionally, the distance d may be equivalent to the length of the bushing 2. Alternatively, the distance d may be equivalent to the length of the bushing 2 minus a thickness t2 of the busbar 1. This may be the case when the bushing 2 extends through the busbar 1, and the second end face 24 is flush with the lower side of the busbar 1.

Figs. 3A to 3C illustrate schematic cross sections of bushings 2 according to three further alternative embodiments of the busing 2 as shown in Fig. 2. The description of all previous figures applies accordingly, unless explicitly stated otherwise. The bushing 2 is fixed to the busbar 1 in a form-fitting manner and/or in a force-fitting manner and/or in a materially bonded manner. The bushing 2 in Fig. 3A has a bushing opening 21 which only extends to a certain degree into the body of the bushing 2. In other words, the solid body of the bushing 2, that is, a portion of the bushing 2 without a bushing opening 21, may be larger, that is, have a length of for example 10% or 20% or 30% of the distance d. However, the structure of the first end face 23 of the bushing 2 is identical to the structure in Fig. 2. The difference of this embodiment lies in the structure of the second end face 24. Here, the second end face 24 is formed as a lower protrusion 26 with a smaller vertical extension (x-y-plane in Fig. 2) than the mid-portion and/or the top-portion of the bushing 2. For this embodiment, the opening of the busbar may be smaller than in Fig. 2, to fit the lower protrusion 26. The fit may be tight, for example for a force-fitting connection, or may be lose, for a rough positioning and subsequent fixation in a materially bonded manner. Fig. 3B is, compared to Fig. 3A, flipped by 180°. The second end face 24 is identical to the embodiment shown in Fig. 2. However, the top of the bushing 2 is formed with an upper protrusion 25. The upper protrusion 25 may be provided with an outer thread (not shown) and/or a through hole in horizontal direction (not shown) and/or fixing grooves (not shown) to which a fixation means can be connected. In this embodiment, the fixation means may be a nut, a clamp, a clip or similar means. Optionally, the fixation means may be formed integrally, that is, the upper protrusion may have a conical shape configured for fixing the circuit board. The bushing 2 in Fig. 3C is similar to the bushing in Fig. 3B. However, the upper protrusion 25 is provided with at least one protrusion groove 27 (extending in the x-y-plane) going through the upper protrusion 25 and forming two protrusion legs 210. There may be a plurality of protrusion grooves 27 forming a plurality of protrusion legs 210. The protrusion legs 210 may have a square cross-sectional shape and may have one or more first hooks 28 formed on their outer edge. The first hooks 28 may snap onto the upper side of the circuit board 3 and connect the circuit board 3 with the bushing 2. Here, the hooks are an example for a form-fitting fixation. The protruding groove 27 provides the flexibility for the protrusion legs 210 to bend inwardly and thereafter bend outwardly, when the protrusion legs 210 have passed through the circuit board 3. On the lower side of the bushing 2, at least one leg groove 211 is formed as a through hole in horizontal direction (x-y-plane), thereby forming two or more lower legs 212 of the bushing 2. The lower legs 212 have, at their outer corners, one or more second hooks 29. Similar to the first hooks 28, the second hooks 29 latch onto the lower side of the busbar 1, when the lower legs 212 reach through the opening 11 of the busbar 1. The legs may additionally be fixed in a materially bonded manner. Additionally, all of the mentioned features of the embodiments shown in Figs. 2 to 3C regarding the bushing may be combined with each other or may be altered to realize similar embodiments.

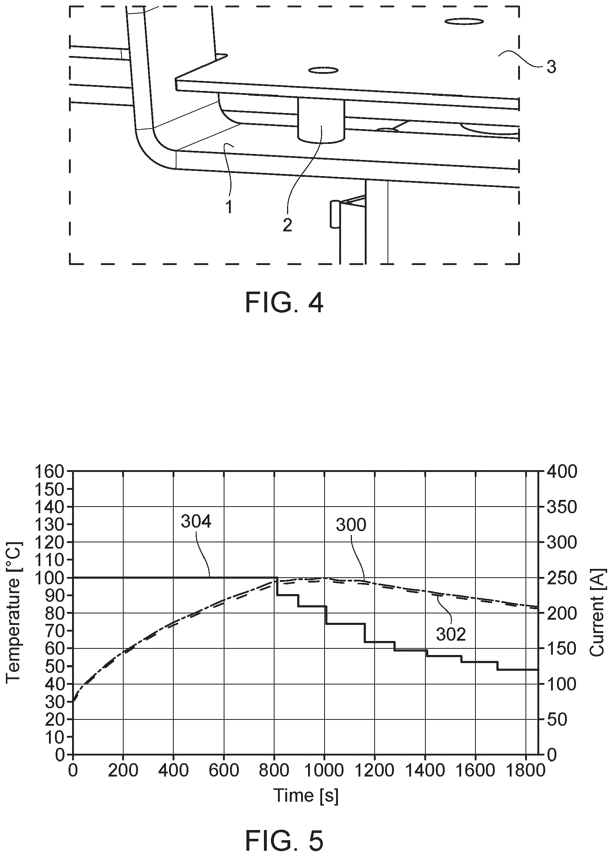

Fig. 4 illustrates a perspective exemplary view of a bushing 2 between a busbar 1 and a circuit board 3. The structure is consistent with Figs. 1 to 3C, and all of the previous descriptions apply accordingly. However, certain parts like the fixation means, the temperature sensor 5, details of the bushing 2 or the voltage signal line 6 are omitted. It can be seen that the busbar 1 may be bent. This may be due to certain battery cell 10 arrangement constraints or for reaching terminals of a battery module 100. Further, the circuit board 3 may have a larger extension in width than the busbar 1 and may contact a plurality of busbars 1 by a plurality of bushings 2. Then, a plurality of temperature sensors 5 and a plurality of voltage signal lines 6 may be present.

Fig. 5 illustrates a plot of the temperature change over time on the circuit board 3 at a circuit board heat spot on the circuit board 3 directly adjacent to the connection point of the bushing 2 with the circuit board 3 and at the temperature sensor 5 remote from the circuit board heat spot. The bushing 2 conducts heat from the busbar 1 to the circuit board 3, and the circuit board transfers the heat to the temperature sensor 5. The circuit board heat spot may be a board connection section 32 (cf. Fig. 2). This plot is obtained by FEM analysis on a circuit board 3 around a bushing heat spot of a bushing 2 as described in the preceding paragraphs. The temperature curve at the board heat spot is indicated by numeral 300, the temperature curve at the temperature sensor 5 is indicated by numeral 302 and a charging current curve is indicated by numeral 304. At t=0, the temperature is at about 30 °C. The battery module 100 is charged at a charging current of 100A, which causes an increase in temperature of the busbar 1 and, in turn, of the circuit board heat spot on the printed circuit board 3 and the temperature sensor 5. The temperature difference in this non-limiting example is about less than 2K at the maximum temperature of about 100 °C. In other words, the temperature difference between a section of the circuit board 3 in direct contact to the bushing 2 and a section of the circuit board 3 in direct contact to the temperature sensor 5 is less than 2K. Compared to the temperature measured directly at the circuit board heat spot, the temperature difference may be less than 3%. Optionally, the temperature difference may be less than 2%. The temperature difference may be reduced by placing the temperature sensor 5 closer to the circuit board heat spot. Then, the temperature difference may even be smaller, like 0.5K. When the temperature difference is small, the time delay between a temperature rise at the busbar and the sensing of the temperature by the temperature sensor 5 is negligible.

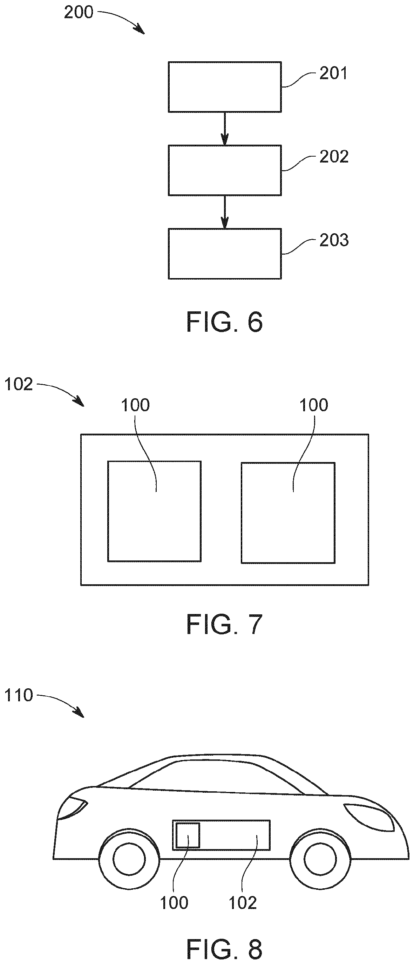

Fig. 6 illustrates a flow-chart for a method 200 for providing a monitoring functionality for a battery module 100. The description of the previous figures may be applied accordingly. The method includes, in a first step 201, the fixing of the bushing 2 to the busbar 1. As described above regarding Figs. 2 to 3C, the bushing 2 may be fixed in various manners to the busbar 1. In a second step 202, the circuit board 3 including the temperature sensor 5 and the voltage line 6 is placed onto the bushing 2 such that a board opening 31 of the circuit board 3 and the bushing 2 align. When the bushing 2 has a bushing opening 21 providing an opening at the first end face 23 of the bushing 2, both openings align and the fixation means goes into both openings. When the bushing 2 is provided with an upper protrusion 25, this protrusion goes through the board opening 31 of the circuit board 3 and the fixation means may go onto or into the upper protrusion 25. In both manners, in a third step 203, the bushing 2 is fixed to the circuit board 3 by fixation means. Thereby, the circuit board 3 is thermally and electrically connected to the busbar 1 by the bushing 2. No additional mounting steps are required and, therefore, easy installation is achieved.

Fig. 7 illustrates a schematic view of a battery system 102 according to an embodiment of the present invention. The description of all previous figures applies accordingly. In this embodiment, the battery system 102 includes two battery modules 100, but the battery system 102 is not limited thereto. The battery system 102 may also include three, four or more battery modules.

Fig. 8 illustrates a schematic view of an electric vehicle 110 according to an embodiment of the present invention. The description of all previous figures applies accordingly. In this embodiment, the electric vehicle 110 includes at least a battery module 100 for supplying the electrical vehicle 110 with energy. Alternatively, the electric vehicle 110 may include a battery system 102. Battery modules 100 of the battery system 102 may be distributed within the electric vehicle 110.

### Reference Signs

- 1: busbar
11 opening
- 2: bushing
21 bushing opening
22 internal thread
23 first end face
24 second end face
25 upper protrusion
26 lower protrusion
27 protrusion groove
28 first hook
29 second hook
210 protrusion leg
211 leg groove
212 lower leg
- 3: circuit board
31 board opening
32 board connecting section
- 41: screw
- 5: temperature sensor
- 6: voltage signal line
- 10: battery cell
- 12: housing
- 100: battery module
- 102: battery system
- 110: electric vehicle
- 200: method for providing a monitoring functionality for a battery module
- 201: fixing of the bushing to the busbar
- 202: placing the circuit board onto the bushing
- 203: fastening the bushing to the circuit board
- 300: temperature curve at board heat spot
- 302: temperature curve at temperature sensor
- 304: charging current curve

## Claims

1. A battery module (100), comprising:
a plurality of battery cells (10);
a busbar (1) for contacting the plurality of battery cells (10); and
a thermally and electrically conducting bushing (2), thermally and electrically fixed to the busbar (1);
a circuit board (3) fixed to the bushing (2) by fixation means such that the bushing (2) spaces the circuit board (3) from the busbar (1),
wherein the circuit board (3) comprises:
a temperature sensor (5) configured for contacting the busbar (1) through the bushing (2) in a thermally conducting manner; and
a voltage signal line (6) configured for contacting the busbar (1) through the bushing (2) in an electrically conducting manner.

2. The battery module (100) according to claim 1, wherein the bushing (2) is fixed to the busbar (1) in a form-fitting manner and/or in a force-fitting manner and/or in a materially bonded manner.

3. The battery module (100) according to claim 2, wherein the force-fitting manner comprises press-fitting the bushing (2) in an opening (11) of the busbar (1).

4. The battery module (100) according to any one of the preceding claims, wherein the circuit board (3) has a thickness and the bushing (2) spaces the circuit board (3) from the busbar (1) by at least twice the thickness of the circuit board (3).

5. The battery module (100) according to any one of the preceding claims, wherein the bushing (2) is provided with a bushing opening (21) extending from a first end face (23) of the bushing (2) facing the circuit board (3) towards the busbar (1).

6. The battery module (100) according to claim 5, wherein the bushing opening (21) extends from the first end face (23) to a second end face (24) of the bushing (2) opposite to the first end face (23).

7. The battery module (100) according to any one of the preceding claims, wherein the bushing (2) is a hollow cylinder provided with a bushing opening (21).

8. The battery module (100) according to any one of the preceding two claims, wherein the fixation means comprises a screw, a bolt, a nut, a splint or a rivet.

9. The battery module (100) according to any one of the preceding claims, wherein the circuit board (3) forms part of a monitoring unit selected from the group of a battery disconnect unit, a battery management unit or a cell supervision circuit.

10. The battery module (100) according to any one of the preceding claims, wherein a temperature difference between a section of the circuit board (3) in direct contact to the bushing (2) and a section of the circuit board (3) in direct contact to the temperature sensor (5) is less than 1K.

11. The battery module (100) according to any one of the preceding claims, wherein the bushing (2) is a metal bushing.

12. The battery module (100) according to any one of the preceding claims, wherein the voltage signal line (6) is a high voltage sensing line.

13. A method (200) for providing a monitoring functionality for a battery module (100) according to any one of the preceding claims, wherein the method (200) comprises the steps of:
a) fixing (201) the bushing (2) to the busbar (1);
b) placing (202) the circuit board (3) comprising the temperature sensor (5) and the voltage signal line (6) onto the bushing (2) such that a board opening (31) of the circuit board (3) and the bushing (2) align; and
c) fastening (204) the bushing (2) to the circuit board (3) by fixation means, thereby electrically and thermally connecting the busbar (1) to the circuit board (3) through the bushing (2).

14. Battery system (102) comprising a plurality of battery modules (100) according to any one of the preceding claims.

15. Electric vehicle (110) comprising the battery module (100) according to any one of the preceding claims 1 to 12 or the battery system (102) according to claim 14.

## Amended claims

### Amended claims in accordance with Rule 137(2) EPC.

1. A battery module (100), comprising:
a plurality of battery cells (10);
a busbar (1) for contacting the plurality of battery cells (10); and
a thermally and electrically conducting bushing (2), thermally and electrically fixed to the busbar (1), wherein the bushing (2) has a hollow portion connected to a bushing opening (21) and a protruding portion located on a side opposite to the bushing opening (21);
a circuit board (3) fixed to the bushing (2) by fixation means using the hollow portion of the bushing (2) and interacting with the protruding portion of the bushing (2) such that the bushing (2) spaces the circuit board (3) from the busbar (1),
wherein the circuit board (3) comprises:
a temperature sensor (5) configured for contacting the busbar (1) through the bushing (2) in a thermally conducting manner; and
a voltage signal line (6) configured for contacting the busbar (1) through the bushing (2) in an electrically conducting manner.

2. The battery module (100) according to claim 1, wherein the bushing (2) is fixed to the busbar (1) in a form-fitting manner and/or in a force-fitting manner and/or in a materially bonded manner.

3. The battery module (100) according to claim 2, wherein the force-fitting manner comprises press-fitting the bushing (2) in an opening (11) of the busbar (1).

4. The battery module (100) according to any one of the preceding claims, wherein the circuit board (3) has a thickness and the bushing (2) spaces the circuit board (3) from the busbar (1) by at least twice the thickness of the circuit board (3).

5. The battery module (100) according to any one of the preceding claims, wherein the bushing (2) is provided with the bushing opening (21) extending from a first end face (23) of the bushing (2) facing the circuit board (3) towards the busbar (1).

6. The battery module (100) according to claim 5, wherein the bushing opening (21) extends from the first end face (23) to a second end face (24) of the bushing (2) opposite to the first end face (23).

7. The battery module (100) according to any one of the preceding claims, wherein the bushing (2) is a hollow cylinder provided with a bushing opening (21).

8. The battery module (100) according to any one of the preceding two claims, wherein the fixation means comprises a screw, a bolt, a nut, a splint or a rivet.

9. The battery module (100) according to any one of the preceding claims, wherein the circuit board (3) forms part of a monitoring unit selected from the group of a battery disconnect unit, a battery management unit or a cell supervision circuit.

10. The battery module (100) according to any one of the preceding claims, wherein a temperature difference between a section of the circuit board (3) in direct contact to the bushing (2) and a section of the circuit board (3) in direct contact to the temperature sensor (5) is less than 1K.

11. The battery module (100) according to any one of the preceding claims, wherein the bushing (2) is a metal bushing.

12. The battery module (100) according to any one of the preceding claims, wherein the voltage signal line (6) is a high voltage sensing line.

13. A method (200) for providing a monitoring functionality for a battery module (100) according to any one of the preceding claims, wherein the method (200) comprises the steps of:
a) fixing (201) the bushing (2) to the busbar (1);
b) placing (202) the circuit board (3) comprising the temperature sensor (5) and the voltage signal line (6) onto the bushing (2) such that a board opening (31) of the circuit board (3) and the bushing (2) align; and
c) fastening (204) the bushing (2) to the circuit board (3) by fixation means, thereby electrically and thermally connecting the busbar (1) to the circuit board (3) through the bushing (2).

14. Battery system (102) comprising a plurality of battery modules (100) according to any one of the preceding claims.

15. Electric vehicle (110) comprising the battery module (100) according to any one of the preceding claims 1 to 12 or the battery system (102) according to claim 14.
